# EUROPÄISCHE PATENTANMELDUNG

(11) **EP 1 084 888 A1**
(43) Veröffentlichungstag der Anmeldung: **21.03.2001**
(21) Anmeldenummer: 99118568.7
(22) Anmeldetag: 20.09.1999
(51) Int. Cl.: B60J 10/02, B60J 10/00

(54) **Verfahren zum Verkleben einer Scheibe an einer Karosserie**

(71) Anmelder: Eftec Europe Holding AG, c/o Revisa Treuhand AG, 6300 Zug (CH)
(72) Erfinder: Walterspiel, Bernardo, 8280 Kreuzlingen (CH); Rempfler, Urs, 9050 Appenzell (CH); Rupar, Josef, 28149 Hässleholm (SE)
(74) Vertreter: Hepp, Dieter

(57) **Zusammenfassung**

Verfahren zum Verkleben einer Scheibe (1) an einer Karosserie (4) mit einem thermisch härtenden, pastösen Klebstoff (3), indem zunächst auf einer der Verklebung dienenden Kontaktfläche der Scheibe (1) oder der Karosserie (4) ein Widerstandsdraht (2) aufgelegt wird. Der Widerstandsdraht (2) ist vorzugsweise in Form eines periodischen Musters, z.B. eines Zickzack-Musters, aufgelegt. Auf die Kontaktfläche (5) wird ein Streifen (6) des thermisch härtenden Klebstoffs (3) aufgedrückt und die Scheibe (1) auf die dafür bestimmte Kontaktfläche einer Karosserie (4) aufgelegt. Durch Widerstandsheizung wird der Klebstoff (3) bei mehr als 80°C ausgehärtet. Vorteil des Verfahrens ist die einfache Lagerung der Komponenten, die einfache Handhabung bei der Montage und die kontrollierte, gleichmässige Aushärtung direkt am für die Adhäsionsqualität wichtigen Übergang zwischen Klebstoff (3) und Scheibe (1) und/oder Karosserie (4).

## Beschreibung

Gegenstand der vorliegenden Erfindung ist ein Verfahren zum Verkleben einer Scheibe, vorzugsweise einer Windschutzscheibe, mit einer Karosserie sowie eine diesbezügliche Anordnung, ein Bausatz und ein Glasmodul gemäss den Merkmalen des Oberbegriffs der unabhängigen Patentansprüche.

Die Glasscheiben von Fahrzeugen, insbesondere die Windschutzscheiben, sind während der Fahrt durch darauf aufprallende Gegenstände leicht zu beschädigen, was den umgehenden Austausch der Windschutzscheibe in einer Werkstatt erforderlich macht. Diese muss eine schnelle, aber auch den Sicherheitsanforderungen gerecht werdende Neuverglasung bereitstellen. Die Werkstatt benötigt daher ein flexibel einsetzbares System für die Verklebung, das sich durch geringen Aufwand bei der Lagerung und bei der Montage auszeichnet. Die Bevorratung sperriger, genau angepasster Profilbautcile ist unerwünscht. Zudem finden sich bei Reparaturmassnahmen im allgemeinen noch Klebstoffreste der früheren Verklebung an der Karosserie. Das Erzielen einer konstant dichten Verklebung entlang dieser Oberfläche ist ein wesentliches Problem bei der Scheibenreparatur; zur Erzielung einer dauerhaften Verklebung werden in der Regel die zu verklebenden Oberflächen mit haftvermittelndem Material vorbehandelt.

WO 94/18255 beschreibt eine lagerfähige Glasscheibe, auf deren Umfang ein Streifen eines thermisch härtenden Klebstoffs bereits fertig aufgetragen ist. Es handelt sich um einen Einkomponenten-Polyurethanklebstoff. Der Klebstoff besteht entweder aus einem Prepolymer mit terminalen, blockierten Isocyanatgruppcn oder aus einem Polyol/Polyamin vermischt mit verkapselten Polyisocyanaten oder aus einem radikalisch polymerisierbaren Polyurethan-Prepolymer. Die Vernetzungsreaktion wird thermisch initiiert; die dafür erforderliche Energiezufuhr kann durch ohmsche Erwärmung (elektrische Widerstandsheizung), elektromagnetische Strahlung oder Induktion erfolgen. Zur ohmsehen Erwärmung können leitfähige Füllstoffe wie Metallflocken oder Stahlfasern der Klebstoffmischung beigefügt werden.

Nachteilig im Fall einer ohmschen Erwärmung ist die Beeinflussung der Material- und Alterungseigenschaften des Klebstoffes durch die metallischen Füllstoffe sowie die Gefahr des ungleichmässigen Aushärtens einzelner Bereiche der Klebung.

Um einen gleichmässigen Stromfluss zu gewährleisten, müssen blanke Elektroden möglichst äquidistant in die Klebstoffmasse eingesteckt werden, da der Strom sonst bevorzugt den Weg des geringeren ohmschen Widerstandes wählt (Parallelschaltung). Damit ist die Temperaturkontrolle unzulänglich. Die festen, leitfähigen Füllmaterialien können ungleichmässig verteilt sein und ein gleichmässiges Aushärten verhindern. Die leitfähige Klebstoffmasse verfügt über keine Isolierung zur Karosserie hin. Alternative Methoden der Energiezufuhr (z.B. Induktionsheizung) sind technisch/apparativ zu aufwendig.

Zudem ist der Auftrag des Klebstoffs bereits vor Lagerung der Scheibe von grossem Nachteil. Das Glasbauteil selbst hat kein Verfallsdatum und kann hohen Temperaturen ausgesetzt werden, während das für den Klebstoff nicht zutrifft. Die Lagerungserfordernisse des Klebstoffs z.B. bzgl. der Umgebungstemperatur oder der Luftfeuchtigkeit, bestimmen die Bevorratung des sperrigen Glasbauteils. Ein flexibles System aus separat gelagerter Klebstoff- und Glaskomponente ist vorzuziehen.

US 3 574 024 beschreibt ein Klebstoffband und seine Verwendung in einem Verfahren zur Fahrzeugverglasung. Das Klebstoffband besteht aus einem hitzehärtbaren Elastomer mit einem darin zentral eingelassenen Widerstandsdraht zur elektrischen Widerstandsheizung. Beim Elastomeren handelt es sich zum Beispiel um Chloropren oder Butadien-Acrylnitril-Copolymer. Der Widerstandsdraht verläuft zentral in einem Fiberglasrohr, das mit dem deformierbaren Klebstoff ummantelt ist. Nach dem Anlegen einer Widerstandheizung oder ,Erhitzen' benötigt der Klebstoff noch einige Tage zur latenten, vollständigen Aushärtung; erst danach ist eine hinreichende Festigkeit der Verklebung gegeben.

Ein Nachteil dieser Lösung ist der Zwang zum Ablängen des Dichtungsbands mit dem darin eingelassenen Draht sowie die Handhabung der Drahtenden zwecks Anschluss an die Stromquelle, ohne dabei die Fensterabdichtung zu beeinträchtigen. Die Enden müssen z.B. überkreuzt werden, wobei sich leicht eine Fuge in der Verklebung ergibt. Der Fiberglaskern muss bei der Montage zudem sorgfältig positioniert werden, damit er beim Aufpressen der Scheibe auf die Karosserie nicht an den Rand der zu verklebenden Zone gedrängt wird. Das Ausrichten des Widerstandsdrahtes auf die Verklebungszone zwecks optimaler Wärmeeinwirkung bedarf ständiger Kontrolle. Die Aushärtungszeit ist für den Zweck einer Notreparatur zu lang.

Aufgabe der vorliegenden Erfindung ist es, die Nachteile des Bekannten zu vermeiden und ein Verfahren zum Verkleben von Scheiben, vorzugsweise Windschutzscheiben, an einer Karosserie zu schaffen, das sich durch einfache Handhabung und durch zuverlässiges Aushärten auszeichnet.

Diese Aufgabe wird gemäss den kennzeichnenden Merkmalen des unabhängigen Patentanspruchs 1 gelöst. Ein weiterer Gegenstand der vorliegenden Erfindung sind ein Bausatz und ein lagerfähiges Glasmodul zur Durchführung eines derartigen Verfahrens sowie eine sich aus der Durchführung des Verfahrens ergebende Anordnung einer Scheibe an einer Karosserie gemäss den Merkmalen der unabhängigen Ansprüche.

Das erfindungsgemässe Verfahren zum Verkleben einer Scheibe, vorzugsweiser einer Windschutzscheibe, mit einer Karosserie erfordert das Aufbringen eines Streifens eines pastösen, hitzehärtenden Klebstoffes auf eine Kontaktfläche der Scheibe oder der Karosserie, das Auflegen der Kontaktfläche der Scheibe auf den aufgetragenen Klebstoff und das thermische Aushärten des Klebstoffes durch elektrische Widerstandsheizung, wobei auf mindestens eine Kontaktfläche ein Widerstandsdraht aufgelegt wird. Der Widerstandsdraht wird also auf eine später vom Klebstoff bedeckte Kontaktfläche aufgelegt.

Widerstandsdraht und Klebstoff bilden eine Schicht-Struktur zwischen den Kontaktflächen von Scheibe und Karosserie. Vorteil des Verfahrens ist, dass der Klebstoff keine besondere Zubereitung etwa mit elektrokonduktiven Füllstoffen erfordert. Auch eine Vorfertigung als kompliziertes, mehrschichtig aufgebautes Bauteil entfällt. Der Klebstoff kann in kompakter Form gelagert werden, z.B. als formbare Masse in einer Kartusche oder als aufgewickelter Streifen. Vorteilhaft ist auch, dass die primäre Hitzewirkung an einer für die Verklebung wichtigen Übergangszone zwischen Klebstoffmasse und Glasmaterial bzw. Klebstoffmasse und Korosserie stattfindet. Die Oberfläche der Scheibe, bei der es sich um eine Glasoberfläche oder um einen aufgebrachten Keramik-Siebdruck handeln kann, kann vorzugsweise durch Aufbringen einer haftvermittelnden Beschichtung, z.B. eines handelsüblichen Primers vorbehandelt werden.

Die Oberfläche der Karosserie kann für die Verklebung vorbereitet werden, indem beispielsweise auf die Lackschicht eine haftvermittelnde Substanz, wie sie für derartige Verklebungen zur Verfügung stehen, aufgebracht wird. Ist auf der Karosserie noch eine Schicht der ursprünglichen Klebdichtung vorhanden, so kann diese in analoger Weise vorbehandelt werden. Dem Fachmann sind entsprechende Vorbehandlungsprodukte bekannt.

Beim erfindungsgemässen Verfahren wird die Vernetzung des Klebstoffs direkt an der Kontaktfläche zwischen Scheibe bzw. Flansch und Klebstoff ausgelöst. Der Widerstandsdraht erzeugt, im Gegensatz zu elektrisch leitenden Füllmaterialien, einen konstanten, reproduzierbaren Stromfluss und Erwärmung über die ganze Kontaktfläche. Es kann eine gleichmässige Aushärtung des Klebstoffstreifens erreicht werden.

Als Karosserie im Sinne der vorliegenden Erfindung gilt eine aus Metall gefertigte Fassung mit einer vorgeformten Auflagefläche (Flansch), die zur Aufnahme einer Scheibe bestimmt ist. Eine solche Auflagefläche bezeichnet die Kontaktfläche im Sinne der vorliegenden Erfindung. Es kann sich um Fahrzeugkarosserien, also Karosserien für PKW, LKW, Busse etc, handeln. Es kann sich aber auch um einfache Container, Fahrzeugaulbauten, Eisenbahnwaggons u.ä. handeln. Die Kontaktfläche der Scheibe ist ein auf der Innenseite der Scheibe entlang des äusseren Umfangs verlaufender Streifen; er kann bis zu einigen Zentimetern breit sein, entsprechend der gewünschten Fläche der Verklebung.

Ein Widerstandsdraht im Kontext der vorliegenden Erfindung kann mit einer Spannung im Bereich von 10-100V betrieben werden. Er kann mit einer thermisch leitenden, elektrisch isolierenden Beschichtung überzogen sein.

In Abhängigkeit vom verwendeten Klebstoff können in den einzelnen Ausführungsformen die Wärmeleitfähigkeit der Beschichtung, die auf der äusseren, den Kontakt zum Klebstoff herstellenden Oberfläche des Drahts bzw. der Beschichtung zu erreichende Temperatur, der sich einstellende Temperaturgradient innerhalb der Klebstoffmasse sowie die Heizleistung (W/cm²) bzw. die zur Verfügung stehende Oberfläche des (beschichteten) Drahtes berücksichtigt werden, um die optimale Heizdauer zu bestimmen.

Der Widerstandsdraht kann nach dem Auflegen auf die Kontaktfläche durch den Klebstoff-Streifen selbst befestigt werden. Alternativ sind auch zusätzliche Mittel einsetzbar. Es ist möglich, den Widerstandsdraht punktuell mit einem beliebigen Klebstoff (z.B. geringste Mengen eines Cyanacrylatklebstoffes) oder punktucll mit einer kleinen Menge des pastösen, erfindungsgemässen Klebstoffs gegen Verrutschen zu fixieren. Es ist aber auch möglich, den Draht vor Auflegen des Klebstoffstreifens z.B. mit Magnethaltern oder mechanischen Clips gegen Verrutschen zu fixieren.

Es ist möglich, dass der Widerstandsdraht bereits fertig auf einer Glasscheibe zur Herstellung eines Glasmoduls appliziert ist und so nur noch der Klebstoffstreifen während der Montage aufgebracht werden muss.

Ein derartiges, lagerfähiges Glasmodul mit daran befestigtem Widerstandsdraht ist ein weiterer Gegenstand der vorliegenden Erfindung.

In einer bevorzugten Ausführungsform des Glasmoduls ist der Widerstandsdraht durch die Klebstoffschicht überdeckt. In einer weiteren bevorzugten Ausführungsform verläuft der Widerstandsdraht in Form eines periodischen Musters über die ganze Breite der Kontaktfläche.

Es ist auch möglich, jede der beiden Kontaktflächen an Scheibe und Karosserie mit einem Widerstandsdraht zu belegen, um vollständige und schnelle Aushärtung zu garantieren.

In einer bevorzugten Ausführungsform werden die Enden des Widerstandsdrahtes auf der Kontaktfläche parallel aufgelegt.

Eine weitere bevorzugte Ausführungsform des Verfahrens ist es, den Widerstandsdraht auf der Kontaktfläche in Form eines vorzugsweise periodischen Musters aufzubringen. Die Gesamtlänge des Drahtes wird dadurch grösser als der äussere Umfang der Kontaktfläche. Es ist möglich, den Widerstandsdraht mit einer zickzack-förmigen oder ziehharmonikaähnlichen Struktur vorzufabrizieren. Beim Aufbringen auf die Kontaktfläche ist der Draht somit nicht mehr gestreckt, sondern verläuft in einem periodischen Muster zwischen den beiden äusseren Begrenzungen der Kontaktfläche. Vorteilhaft daran ist, dass so die ganze Kontaktfläche durch den Draht abgedeckt und somit später gleichmässig erwärmt wird. Dies ermöglicht das direkte Erwärmen und Aushärten des Klebstoffs auf einer grösstmöglichen Oberfläche. Es fördert die Geschwindigkeit und die Qualität der Verklebung.

In einer weiteren, bevorzugten Ausführungsform ist der pastöse, hitzehärtende Klebstoff ein Einkomponenten-Klebstoff. Als pastös im Sinne dieser Erfindung wird eine bei Raumtemperatur deformierbare, nicht fliessfähige, aber cxtrudicrbare Masse bezeichnet. Es kann sich um eine homogene Mischung, oder aber auch um ein feindisperses System handeln. Die Verwendung eines Einkomponentenklebstoffs macht das erfindungsgemässe Verfahren schnell und einfach.

In einer weiteren Ausführungsform handelt es sich bei dem Einkomponenten-Klebstoff um eine bei Raumtemperatur feste, bei erhöhter Temperatur aufschmelzbare Masse. Dies erlaubt, den Streifen des Klebstoffs, der zur Montage der Scheibe benötigt wird, in gebrauchsfertiger Form zu lagern, indem der Klebstoff bei einer Temperatur oberhalb der Schmelztemperatur, jedoch unterhalb der Aushärtungstemperatur, zu einem Streifen extrudiert wird.

In einer bevorzugten Ausführungsform ist der Einkomponenten-Klebstoff bei einer Temperatur von mehr als 80°C aushärtbar. Vorzugsweise härtet ein erfindungsgemässer Einkomponentenklebstoff in weniger als einer Stunde aus, besonders bevorzugt in weniger als 30 min. Ein so gehärteter Klebstoff genügt den Sicherheitsanforderungen. Eine Widerstandsheizung erlaubt es, innerhalb weniger Sekunden nach Anlegen einer Stromspannung auf der Übergangsfläche des Widerstandsdrahtes zum Klebstoff eine Temperatur zwischen 80°C bis zu maximal 250°C zu erzeugen. Die Maximaltemperatur wird durch die Stromstärke kontrolliert, eine Überhitzung des Klebstoffmaterials wird somit verhindert. Die für die Initiierung der Aushärtung erforderliche erhöhte Temperatur bewirkt eine hohe Reaktionsgeschwindigkeit der Vernetzungsreaktion.

Diese Eigenschaft des verwandten Einkomponenten-Klebstoffs in Kombination mit der direkten Erwärmung an mindestens einer Kontaktfläche erlaubt eine schnelle Montage einer Scheibe, die sofort nach Reparatur voll funktionsfähig ist und allen Sicherheitsanforderungen genügt. Ein zeitlich verzögertes Aushärten, wie es aus dem Stand der Technik für verschiedene Materialien, insbesondere feuchtigkeitshärtende Materialien, bekannt ist, wird vermieden.

In einer weiteren bevorzugten Ausführungsform des Verfahrens wird ein Einkomponenten-Klebstoff ausgewählt aus der Gruppe der hitzehärtenden Polyurethanklebstoffe, umfassend oberflächendesaktivierte Polyisocyanate und mindestens eine isocyanatreaktive Komponente, wobei bevorzugt eine Komponente polymerer Natur ist.

Polyurethanklebstoffe sind aus dem Stand der Technik als bevorzugte Werkstoffe zur Scheibenverklebung bekannt. Sie weisen die geforderten Verarbeitungs- und Härtungseigenschaften auf. Ein Einkomponenten-Polyurethanklebstoff enthält bereits alle reaktiven Komponenten. Ein Polyurethanklebstoff im Sinne der vorliegenden Erfindung ist nicht feuchtigkeitshärtend. Dadurch wird, in Verbindung mit der für die thermische Härtung erforderlichen hohen Aktivierungstemperatur, eine gute Lagerstabilität erreicht. Die durch die Aushärtung zu erzielenden mechanischen Eigenschaften sind durch thermische Aushärtung bevorzugt in weniger als einer Stunde zu erzielen. Die Initiierung der Aushärtung ist durch die dafür erforderliche Temperatur kontrollierbar. Ein im Sinne des erfindungsgemässen Verfahrens oberflächeninaktiviertes Polyisocyanat kann sowohl ein durch Bildung eines Polyadduktes mit H-aktiven Verbindungen, ein durch Einschluss in Käfigkomponenten (Molsiebe) oder ein durch Verkapselung inaktiviertes Polyisocyanat sein. Der Einkomptinenten-Klebstoff kann daneben noch Additive wie z.B.Weichmacher, Füllstoffe, Russ, Alterungsschutzmittel, Katalysatoren, etc. enthalten. Die isocyanatreaktive Komponente weist Zerewitinow-aktive Gruppen auf. Dabei kann es sich um ein Polyurethan-Prepolymer, einen Polyester oder Polyether oder ein mit Alkylhydroxy-Resten gepfropftes Polymer handeln oder um eine Mischung derartiger Bestandteile. Neben der Polyolkomponente kann der Einkomponentenklebstoff weitere mit dem Isocyanat reagierende Verbindungen enthalten, z.B. (Poly)Aminc oder aromatische Diamine als Kettenverlängerer und Rheologie einstellende Agentien. Vorzugsweise wird die gewichtsmittlere Molmassc der isocyanat-rcaktivcn Komponente im Bereich von 50-50.000 liegen, besonders bevorzugt im Bereich von 80-10.000.

Eine bevorzugte Ausführungsform des erfindungsgemässen Verfahrens verwendet als Einkomponenten-Klebstoff den Polyurethanklebstoff EFBOND HA 111 (Hersteller: EFTEC AG/CH). Dieser Einkomponenten-Klebstoff weist die in den vorgenannten bevorzugten Ausführungsformen genannten Eigenschaften auf: Er ist als pastöse Masse ohne Kühlung über mehrere Monate in einem geeigneten Gefäss lagerfähig, thermisch härtend bei einer Temperatur von mindestens 80°C und lässt sich bei einer Scheibenreparaturverklebung innerhalb von ca. 15 Minuten aushärten. Eine so verklebte Scheibe genügt den technischen Sicherheitsanforderungen. Die Kontaktfläche der Karosserie kann blankes Metall sein, es kann sich aber auch um eine mit einem Farbstoff oder Lack oder Klebstoffresten der vormaligen Scheibenverklebung beschichtete Oberfläche handeln. Die Lagerstabilität von EFBOND HA 111 beträgt bei 25°C mindestens 13 Monate.

In einer bevorzugten Ausführungsform wird der Widerstandsdraht vor dem Auftragen des Klebstoffs auf eine Kontaktfläche aufgetragen. In einer weiteren bevorzugten Ausführungsform wird der Widerstandsdraht auf eine Kontaktfläche der Scheibe oder der Karosserie und der Klebstoff auf die gegenüberliegende Kontaktfläche der Karosserie oder der Scheibe aufgetragen und sodann die Scheibe auf die Karosserie aufgebracht.

Ein weiterer Gegenstand der vorliegenden Erfindung ist eine sich aus der Durchführung des erfindungsgemässen Verfahrens ergebende Anordnung einer Scheibe, eines Widerstandsdrahtes und eines Streifens eines hitzehärtbaren oder ausgehärteten Klebstoffs an einer Karosserie. Vorzugsweise ist der ausgehärtete Klebstoff ein Polyurethan.

Ein weiterer Gegenstand der vorliegenden Erfindung ist ein Bausatz zur Scheibenreparatur, vorzugsweise für Fahrzeuge, umfassend einen elektrisch heizbaren Widerstandsdraht und einen vorgefertigten Streifen eines pastösen, hitzehärtenden Klebstoffs. Vorzugsweise enthält der Bausatz auch eine Scheibe. Ein Bausatz stellt Komponenten zur Durchführung des erfindungsgemässen Verfahrens in gebrauchsfertiger, portionierter Form zur Verfügung. Er eignet sich daher z.B. auch für den Privatgebrauch.

Die Erfindung ist in in einem Ausführungsbcispicl anhand der Zeichnungen näher erläutert. Es zeigen:
- Figur 1: eine Aufsicht auf eine Windschutzscheibe mit aufgelegtem Widerstandsdraht, und
- Figuren 2a und 2b: einen Querschnitt durch die Anordnung der Scheibe an der Karosserie .

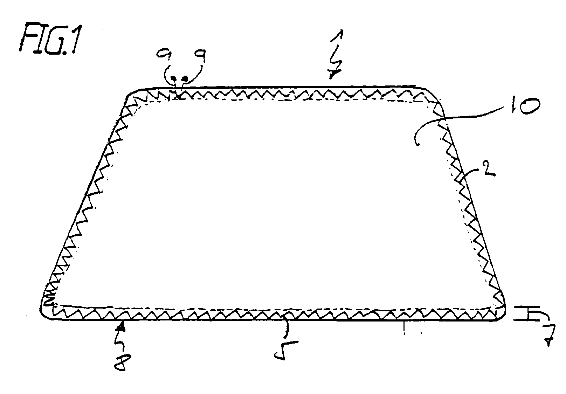

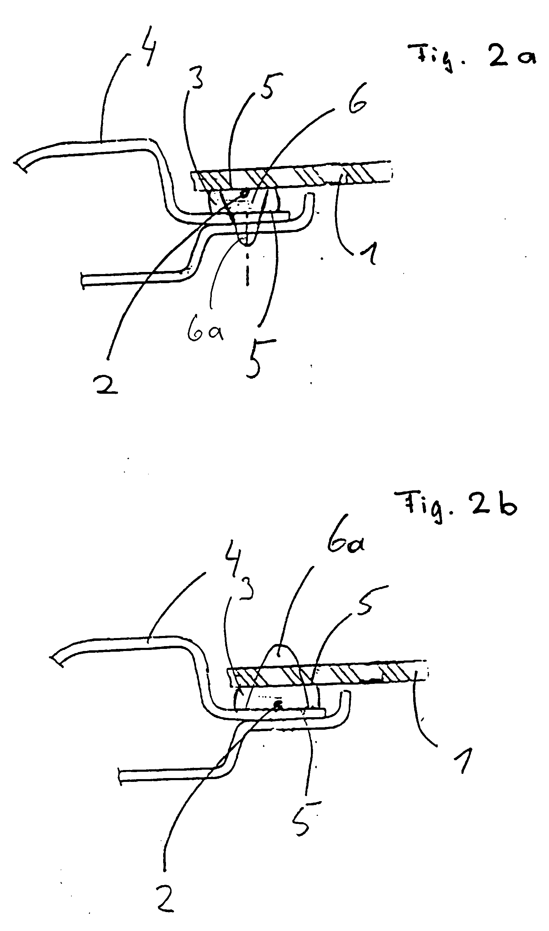

Figur 1 zeigt die Aufsicht auf eine Scheibe 1 mit darauf aufgebrachtem Widerstandsdraht 2 für die Reparaturverglasung eines Fahrzeugs. Der Widerstandsdraht 2 verläuft auf dem Umfang 8 der Scheibenfläche 10; die Enden 9 des Widerstanddrahtes 2 liegen parallel und weisen nach aussen, um so das nahtlose Aushärten eines auf den Widerstandsdraht 2 und die darunterliegende Kontaktfläche 5 der Scheibe 1 aufgelegten Streifens 6a aus einem hitzehärtenden Klebstoff 3 zu ermöglichen. Der Widerstandsdraht 2 hat einen Durchmesser im Bereich von 1-5 mm, vorzugsweise 2-4 mm, wobei er mit einer geeigneten elektrischen Isolationsschicht überzogen sein kann. Der Streifen 6a (Fig. 2a, 2b) aus einem pastösen, hitzehärtenden Klebstoff 3 weist eine Dicke im Bereich 0.5 -5 cm, vorzugsweise 1-2 cm, auf. Der Streifen 6 (Fig. 2a, 2b) verformt sich, wenn die Scheibe 1 mit dem Streifen 6 und dem Widerstandsdraht 2 in der erfindungsgemässen Anordnung auf die Kontaktfläche 5 der Karosserie 4 aufgelegt und angepresst wird. Der Widcrstandsdraht 2 verläuft gemäss Fig. 1 und 2a in Form eines periodischen Musters, z. B. zickzack-förmig, um so die entlang des äusseren Umfangs 8 verlaufende Kontaktfläche 5 der Scheibe 1 über die ganze Breite 7 in regelmässiger Anordnung abzudecken und nachfolgend zu einer gleichmässigen Erwärmung über die ganze Kontaktfläche 5 zu führen. Dies erlaubt eine optimale Verklebung an der Kontaktfläche 5. Es sind verschiedenste Variationen dieses oder eines anderen Musters, auch eine geradlinige Führung, möglich. Der Widerstandsdraht 2 erlaubt es, Temperaturen bis 200°C durch Anlegen einer Spannung von z.B. 60V Gleichspannung innert weniger Minuten zu erzeugen. Es sind aber auch andere Betriebsspannungen möglich. Der Stromfluss wird ungefähr 10-20 A bei einer Drahtlänge von ca. 4,5 m betragen. Geeignete metallische Materialien für den Widerstandsdraht 2 sind aus dem Stand der Technik bekannt.

Figuren 2a und 2b zeigen Querschnitte durch die Anordnung aus Windschutzscheibe 1, Widerstandsdraht 2, einen Streifen 6 des Einkomponenten-Klebstoffs 3 und der im Ausschnitt dargestellten Karosserie 4. Der Widerstandsdraht 2 und der Streifen 6 des Klebstoffs 3 sind schichtartig zwischen den Kontaktflächen 5 von Scheibe 1 und Karosserie 4 angeordnet. Der Widerstandsdraht 2 erwärmt den Klebstoff 3 gleichmässig und direkt am für die Adhäsion wichtigen Übergang zwischen Streifen 6 und einer Kontaktfläche. Der für das Aushärten der inneren Bereiche des Streifens 6 des Einkomponenten-Klebstoffs 3 erforderliche Wärmetransfer führt zu keiner Beeinträchtigung der mechanischen Eigenschaften im ausgehärteten Zustand. Die Darstellung der Schichtstruktur von Scheibe 1, Widerstandsdraht 2, dem Streifen 6 des Einkomponenten-Klebstoffs 3 und der im Ausschnitt dargestellten Karosserie 4 in den Figuren 2a und 2b ist idealisiert. Der im nicht-ausgehärteten Zustand pastöse Streifen 6 des Klebstoffs 3 wird schon allein durch das Gewicht der Scheibe 1 beim Auflegen auf die Karosserie 4 deformiert; der Klebstoff 3 bildet so einen dichten Abschluss zwischen den Kontaktflächen 5 von Scheibe 1 und Karosserie 4. Der Widerstandsdraht 2 ist dann von Klebstoff 3 umgeben.

Figur 2a zeigt dabei die Anordnung des Widerstandsdrahtes 2 an der Grenzfläche zur Scheibe 5, während Figur 2b den Widerstandsdraht 2 zwischen Karosserie und Klebstoff 3 darstellt.

### Beispiel 1

### Widerstandsheizung zur Scheibenverklebung mit einem Einkomponenten-PU-Klebstoff

Eine Windschutzscheibe wird durch sequentiellen Auftrag von Reinigungsmittel und/oder Primer für die Verklebung vorbereitet. Nach Entnahme wird der Karosserieflansch entsprechend den Vorgaben des Automobilherstellers vorbereitet. Auf diesen vorbereiteten Flansch wird ein Widerstandsdraht, der entsprechend vor Ort abgelängt wurde, auf dem Flansch unter Verwendung von Klemmen auf der zu verklebenden Oberfläche fixiert. Als Widcrstandsdraht wurde ein Draht der Fa. Raychem mit der Bezeichnung LSOH Typ 1, low smoke, 0 halogen, blau verwendet. Die Enden des Drahts wurden parallel zueinander durch geeignete Oeffnungen durch einen Aluminiumblock geführt und an die Spannungsquelle angeschlossen. Anschliessend wurde mittels einer Kartuschenpistole der Klebstoff EFBOND HA 111 in Form einer Dreiecksraupe auf den Draht aufgetragen, die Höhe der Raupe betrug dabei 10-12 mm. Die Scheibe wurde unter Verwendung von Saugnäpfen in die Karosserieöffnung eingesetzt und mittels Klebstreifen fixiert. Der Klebstoff wurde durch Anlegen einer Spannung von 60 V innerhalb von 15 min gebrauchsfertig ausgehärtet. Das fertige Automobil wurde in einer Waschstrasse auf Dichtigkeit geprüft.

### Beispiele 2-4 für unterschiedliche Scheibengrössen:

| | Scheibe | Länge/m | Spannung/m | Stromstärke/A | Heizdauer/min. |
|---|---|---|---|---|---|
| B. 2 | klein | 4,2 | 55 | 13 | 15 |
| B. 3 | mittel | 4,65 | 60 | 13 | 15 |
| B. 4 | gross | 5,00 | 65 | 13 | 15 |

Die Verklebung erfolgte analog Beispiel 1.

### Beispiel 5

### Wärmehärtender Polyurethan-Klebstoff für die Scheibenreparatur

In einem Planetenmischer werden 240 Gewichtsteile eines Polyetherdiols mit dem Molekulargewicht 3800 (OH Zahl: 28) Voranol EP 1900, 450 Gewichtsteile eines Polyethertriols mit dem Molekulargewicht 4800 (OH Zahl: 35), Voranol CP 4755, 240 Gewichtsteile eines Phthalatweichmachers und 12 Gewichtsteile eines Polyetheramines Jeffamine D 400 gemischt und evakuiert. Dann werden 100 Gewichtsteile getrockneter Russ und 750 Gewichtsteile einer gefällten oberflächenbehandelten Kreide eingewogen. Die Mischung wird ca. ½ Stunde homogen gemischt. Danach gibt man 92 Gewichtsteile Togodur T9 (TDI Uretdion) hinzu und mischt unter Vakuum bis die Mischung homogen ist. Das Produkt wird zur Lagerung und für die Anwendung in Kartuschen abgefüllt.

### Beispiel 6

In einem Planetenmischer werden bei Raumtemperatur 20 Gewichtsteile eines Polypropylenoxiddiol (OHZ 57) und 1,2 Äquivalentprozent des Stabilisators Ethylendiamin vermischt. Danach werden 10,5 Gewichtsteile TDIH (Harnstoff-Dimer von Toluylendiisocyanat, z.B. Desmodur VP-LS 2116) zugegeben und die Mischung 1 Stunde homogenisiert. Nach Zugabe von 0,5 Gewichtsteilen DETDA (Diethyltoluylendiamin) und 40,6 Gewichtsteilen Jeffamin T5000 wird die Mischung 30 Minuten lang entgast. Dann werden 12 Gewichtsteile getrockneter Russ, 16 Gewichtsteile Kaolin und 0,06 Gewichtsteile des Katalysators Dibutylzinndilaurat zugegeben und die Mischung weitere 30 Minuten unter Rühren entgast. Schliesslich wird das Produkt zur Lagerung und für die Anwendung in Kartuschen abgefüllt.

## Patentansprüche

1. Verfahren zum Verkleben einer Scheibe (1), vorzugsweise einer Windschutzscheibe, mit einer Karosserie (4) umfassend die Schritte:
- Aufbringen eines Streifens (6) eines pastösen, hitzehärtenden Klebstoffes (3) auf eine Kontaktfläche (5) der Scheibe (1) oder der Karosserie (4),
- Auflegen der Kontaktfläche der Scheibe (1) auf den aufgetragenen Klebstoff (3),
- thermisches Aushärten des Klebstoffs (3) durch elektrische Widerstandsheizung, dadurch gekennzeichnet, dass auf mindestens eine Kontaktfläche (5) ein Widerstandsdraht aufgelegt (2) wird.

2. Verfahren nach Anspruch 1, dadurch gekennzeichnet, dass die Enden (9) des Widerstandsdrahtes (2) auf der Kontaktfläche (5) parallel aufgelegt werden.

3. Verfahren nach Anspruch 1oder 2, dadurch gekennzeichnet, dass der Widerstandsdraht (2) in Form eines vorzugsweise periodischen Musters über die ganze Breite (7) der Kontaktfläche aufgebracht wird.

4. Verfahren nach einem der vorhergehenden Ansprüche, dadurch gekennzeichnet, dass als hitzehärtender Klebstoff (3) ein Einkomponenten-Klebstoff aufgebracht wird.

5. Verfahren nach Anspruch 4, dadurch gekennzeichnet, dass der Einkomponenten-Klebstoff (3) bei einer Temperatur von mehr als 80°C aushärtbar ist, vorzugsweise in weniger als einer Stunde aushärtbar ist, besonders bevorzugt in weniger als 30 Minuten.

6. Verfahren nach Anspruch 4 oder 5, dadurch gekennzeichnet, dass der Einkomponenten-Klebstoff (3) ausgewählt wird aus der Gruppe der hitzehärtenden Polyurethanklebstoffe, umfassend oberflächendesaktivierte Polyisocyanate und mindestens eine isocyanatreaktive Komponente, wobei mindestens eine der isocyanatreaktiven Komponenten polymerer Natur ist.

7. Verfahren nach einem der vorangehenden Ansprüche, dadurch gekennzeichnet, dass der Widerstandsdraht (2) vor dem Auftragen des Klebstoffs (3) auf eine Kontaktfläche (5) aufgetragen wird.

8. Verfahren nach einem der vorangehenden Ansprüche, dadurch gekennzeichnet, dass der Widcrstandsdraht (2) auf eine der Kontaktflächen (5) der Scheibe (1) oder der Karosserie (4) und der Klebstoff (3) auf die gegenüberliegende Kontaktlläche (5) der Karosserie (4) oder der Scheibe (1) aufgetragen wird und dass sodann die Scheibe (1) auf die Karosserie (4) aufgebracht wird.

9. Eine Anordnung umfassend eine Scheibe (1), eine Karosserie (4) und einen zwischen den Kontaktflächen (5) von Scheibe (1) und Karosserie (4) hitzehärtbaren oder ausgehärteten Klebstoff (3), dadurch gekennzeichnet, dass zwischen Karosserie (4) und Klebstoff (3) und/oder zwischen Scheibe (1) und Klebstoff (3) ein elektrisch heizbarer Widerstandsdraht (2) eingeschlossen ist.

10. Anordnung nach Anspruch 9, dadurch gekennzeichnet, dass der ausgehärtete Klebstoff (3) ein Polyurethan ist.

11. Ein Bausatz für die Scheibenreparatur, vorzugsweise für Fahrzeuge, umfassend einen elektrisch heizbaren Widerstandsdraht (2) und einen vorgefertigten Streifen eines pastösen, hitzehärtenden Klebstoffs (3).

12. Bausatz nach Anspruch 11, dadurch gekennzeichnet, dass der Bausatz auch eine Scheibe (1) umfasst.

13. Ein lagerfähiges Glasmodul für die Neuverglasung einer Karosserie (4) durch Verkleben an einer nahe dem Umfang (8) des Glasmoduls verlaufenden Kontaktfläche (5), dadurch gekennzeichnet, dass auf der Kontaktfläche (5) des Glasmoduls ein elektrischer Widerstandsdraht (2) befestigt ist.

14. Glasmodul nach Anspruch 13, dadurch gekennzeichnet, dass der Widerstandsdraht (2) durch die Klebstoffschicht (3) überdeckt ist.

15. Glasmodul für die Neuverglasung nach Anspruch 13, dadurch gekennzeichnet, dass der Widerstandsdraht (2) in Form eines periodischen Musters über die ganze Breite (7) der Kontaktfläche (5) verläuft.
